# EUROPÄISCHE PATENTSCHRIFT

(11) **EP 3 762 915 B1**
(45) Veröffentlichungstag und Bekanntmachung des Hinweises auf die Patenterteilung: **23.08.2023**
(21) Anmeldenummer: 19709693.6
(22) Anmeldetag: 06.03.2019
(51) Int. Cl.: G09B 9/00, F41A 33/00

(54) **TECHNISCHE UMRÜSTUNG VON SCHUSSWAFFEN ZUR UMSETZUNG VON MR UND AR INTERAKTION**
TECHNICAL CONVERSION OF FIREARMS FOR THE IMPLEMENTATION OF MR AND AR INTERACTION
EQUIPEMENT TECHNOLOGIQUE D'ARMES A FEU POUR LA MISE EN OEUVRE D'UNE INTERACTION MR ET AR

(30) Priorität: 09.03.2018 AT 600412018
(43) Veröffentlichungstag der Anmeldung: 13.01.2021
(73) Patentinhaber: Peterseil, Thomas, 4052 Ansfelden (AT)
(72) Erfinder: ZWETTLER, Gerald Adam, 4600 Wels (AT); HANREICH, Martin, 4030 Linz (AT); PETERSEIL, Thomas, 4052 Ansfelden (AT)
(74) Vertreter: KLIMENT & HENHAPEL
(86) Internationale Anmeldenummer: PCT/EP2019/055584
(87) Internationale Veröffentlichungsnummer: WO 2019/170756

(56) Entgegenhaltungen:
- EP-A1- 2 801 966
- WO-A2-2006/001016
- US-A1- 2015 276 349
- HAYET BELGHIT ET AL: "Tracking Color marker using projective transformation for augmented reality application", MULTIMEDIA COMPUTING AND SYSTEMS (ICMCS), 2012 INTERNATIONAL CONFERENCE ON, IEEE, 10. Mai 2012 (2012-05-10), Seiten 372-377, XP032259105, DOI: 10.1109/ICMCS.2012.6320245 ISBN: 978-1-4673-1518-0

## Beschreibung

Die Erfindung betrifft eine Anordnung zur datentechnischen Verknüpfung einer realen, abzugsbetätigten Waffe und ihres Schusskanals mit computergenerierten, virtuellen Objekten umfassend eine Simulationsrecheneinheit zur Erstellung computergenerierter, virtueller Objekte, eine tragbare Anzeigeeinrichtung zum Einblenden der von der Simulationsrecheneinheit erstellten computergenerierten, virtuellen Objekte in das vom Schützen wahrgenommene Blickfeld, sowie einen an der Waffe montierten Lagesensor zur Ermittlung der momentanen Raumlage der Waffe, einen durch Betätigung des Abzuges der Waffe auslösbaren Abzugsbetätigungsdetektor, und eine Kamera zur Erfassung optischer Markierungen der Waffe, gemäß dem Oberbegriff von Anspruch 1. Die Erfindung betrifft des Weiteren ein entsprechendes Verfahren zur datentechnischen Verknüpfung einer realen, abzugsbetätigten Waffe und ihres Schusskanals mit computergenerierten, virtuellen Objekten, gemäß dem Oberbegriff von Anspruch 6.

Bei der vorliegenden Erfindung handelt es sich um eine Anwendung so genannter "Mixed-Reality (MR)"-Systeme oder "Augmented Reality (AR)"-Systeme. Hierbei erfolgt das Einblenden eines von einer Simulationsrecheneinheit computergenerierten, virtuellen Objektes in das von einer Person wahrgenommene Blickfeld einer realen Umgebung in Abhängigkeit von der momentanen Position und Blickrichtung der Person, für deren Bestimmung in herkömmlicher Weise unterschiedliche Sensoren wie Beschleunigungssensoren (Accelerometer oder G-Sensoren), mitunter auch in Kombination mit Magnetometern und/oder Gyroskopen, sowie GPS-Systeme verwendet werden, die in der Regel an der Anzeigeeinrichtung angeordnet sind. Die momentane Position und Blickrichtung der Person entscheiden zunächst darüber, ob überhaupt ein virtuelles Objekt eingeblendet wird. Das Einblenden des virtuellen Objekts in seiner Positionierung und Größe im Blickfeld der Person wird in weiterer Folge maßgeblich in Abhängigkeit von der momentanen Position der beobachtenden Person, insbesondere in Abhängigkeit vom Abstand zur beobachtenden Person vorgenommen, um die realistisch wirkende Illusion eines virtuellen Abstandes zu erzeugen. Hierfür werden insbesondere Datenbrillen verwendet, also Vorrichtungen, die wie eine Brille getragen werden und in der Lage sind virtuelle Objekte in der realen Welt anzuzeigen und diese Objekte in Relation zu realen Objekten im Raum zu positionieren. Hierfür wird mithilfe einer entsprechenden Transformationsmatrix eine Umrechnung des "virtuellen Koordinatensystems" der virtuellen Szenerie in das Anzeige-Koordinatensystem der Anzeigeeinrichtung vorgenommen. Des Weiteren ist es bekannt Anzeigeeinrichtungen mit einer Kamera auszustatten, deren kartesisches Koordinatensystem ebenfalls mit dem virtuellen Koordinatensystem und dem Koordinatensystem der Anzeigeeinrichtung harmonisiert ist. Position und Raumlage realer Objekte relativ zum Weltkoordinatensystem der realen Umgebung können in weiterer Folge in das virtuelle Koordinatensystem durch Methoden des optischen und sensorgestützten Trackings umgerechnet werden. Solche Datenbrillen werden auch als "Augmented-Reality"-Brillen oder "Mixed-Reality"-Brillen bezeichnet. Eine Person, die eine solche Brille aufgesetzt hat, sieht die Umgebung wie durch eine normale Sehbrille, allerdings können ihr (holographisch virtuelle) Objekte in das Sichtfeld eingeblendet werden.

Eine mögliche Anwendung besteht in der Ausbildung und im Training von Einsatzkräften der Polizei und des Militärs. Die bewaffneten Einsatzkräfte bewegen sich dabei bei unterschiedlichen Lichtverhältnissen und mitunter auch unter akustischer Beschallung durch ein Trainingsgelände und müssen auf unterschiedliche Szenarien richtig reagieren, die in herkömmlicher Weise beispielsweise durch Hochklappen von Objekten verwirklicht werden. Wird auf das Hochklappen eines Objektes mit einer Schussabgabe reagiert, ist der Treffer unmittelbar ersichtlich. Die Realisierung unterschiedlicher Szenarien ist allerdings begrenzt, zudem können bewegte Objekte nur schwer simuliert werden.

Daher wurden Simulatoren vorgeschlagen, in denen die auszubildende Person sich gänzlich in einer virtuellen Welt bewegt und mit einer Waffe hantiert, die als Attrappe ausgeführt ist und bei Betätigung des Abzuges die Simulation eines Schusses erzeugt, der in weiterer Folge mit den Objekten der virtuellen Welt in eine virtuelle Interaktion gebracht wird. Der Nachteil solcher Simulatoren besteht aber darin, dass sie die Wirklichkeit nur begrenzt nachbilden können, und zwar insbesondere hinsichtlich des Eindruckes sich mit einer echten, geladenen Waffe in einer gefährlichen Situation zu bewegen, was aber genau das Ziel eines solchen Trainings ist.

In der US 2015/276349 A1 wurde eine gattungsgemäße Vorrichtung beschrieben. In der EP 2801966 A1 wird ein Simulationssystem für das Schweißen von Werkstücken beschrieben. In der WO 2006/001016 A2 wird ein Aufnahmesystem für die Schussabgabe einer Waffe beschrieben. Im Artikel von Hayet Belghit et al "Tracking Color Marker Using Projective Transformation for Augmented Reality Application", 2012 International Conference on Multimedia Computing and Systems (ICMCS), IEEE, 10.Mai 2012, S. 372-377, wird die Verwendung farblicher Markierungen für AR-Systeme beschrieben.

Des Weiteren wurde beispielsweise in der EP 1262728 A1 vorgeschlagen, Schusswaffen in Laserpistolen umzurüsten und für Trainingszwecke zu verwenden. Dadurch fehlt aber im Training wiederum der realistische Eindruck des Hantierens mit einer echten Waffe, die das Eigengewicht der Waffe beim Zielen, den Rückstoß bei der Schussabgabe und den Schusslärm umfasst. Insbesondere der korrekte Anschlag der Waffe und das Zielen sind wichtige Trainingsinhalte für Einsatzkräfte, wobei in der Regel Faustfeuerwaffen verwendet werden, bei denen im beidhändigen Anschlag mithilfe von Kimme und Korn gezielt wird.

Für die Ausbildung und das Training von Einsatzkräften wäre es daher am besten, wenn sich die auszubildende Person mit einer realen Waffe durch ein reales Trainingsgelände bewegen könnte, und dabei vielfältige Szenarien simuliert werden könnten, in denen die auszubildende Person einen korrekten Anschlag, korrektes Zielen und die Entscheidung über eine allfällige Schussabgabe üben könnte. Mithilfe des Einblendens virtueller Objekte könnten vielfältige Szenarien simuliert werden, allerdings müsste bei einer Schussabgabe überprüfbar sein, ob ein virtuelles Objekt auch tatsächlich getroffen wurde.

Es besteht daher das Ziel der Erfindung darin eine reale, abzugsbetätigte Waffe und ihres Schusskanals mit computergenerierten, virtuellen Objekten datentechnisch so zu verknüpfen, dass eine Interaktion einer realen Schussabgabe mit virtuellen Objekten ermöglicht wird. Dabei soll die reale Waffe in ihrer Funktionalität, insbesondere in der Möglichkeit einer scharfen Schussabgabe, nicht beeinträchtigt werden und eine Nach- oder Umrüstung von herkömmlichen Waffen möglich sein.

Dieses Ziel wird durch die Merkmale von Anspruch 1 erreicht. Anspruch 1 bezieht sich auf eine Anordnung zur datentechnischen Verknüpfung einer realen, abzugsbetätigten Waffe und ihres Schusskanals mit computergenerierten, virtuellen Objekten umfassend eine Simulationsrecheneinheit zur Erstellung computergenerierter, virtueller Objekte, eine tragbare Anzeigeeinrichtung zum Einblenden der von der Simulationsrecheneinheit erstellten computergenerierten, virtuellen Objekte in das vom Schützen wahrgenommene Blickfeld, sowie einen an der Waffe montierten Lagesensor zur Ermittlung der momentanen Raumlage der Waffe, einen durch Betätigung des Abzuges der Waffe auslösbaren Abzugsbetätigungsdetektor, und eine Kamera zur Erfassung optischer Markierungen der Waffe. Erfindungsgemäß wird hierbei vorgeschlagen, dass es sich bei der tragbaren Anzeigeeinrichtung um eine transparente Datenbrille mit dem Sichtfeld einer realen Umgebung handelt, und die Kamera an der Anzeigeeinrichtung zur Aufnahme von Kamerabildern des Blickfelds der vom Schützen wahrgenommenen, realen Umgebung angeordnet ist, wobei der Lagesensor, die Kamera und der Abzugsbetätigungsdetektor mit einer Recheneinheit zur Ermittlung der Abstandslage der Waffe zur Anzeigeeinrichtung mithilfe der von den Kamerabildern aufgrund der Abstandslage in veränderter Größe erfassten optischen Markierung der Waffe, und zum Errechnen des Schusskanals aus der Raumlage und der Abstandslage der Waffe mittels an sich bekannter mathematischer Verfahren verbunden sind, und die Recheneinheit mit der Simulationsrecheneinheit datentechnisch verbunden ist.

Der Lagesensor ist beispielsweise als 9-Achs IMU G-Sensor ausgeführt und kann beispielsweise unterhalb des Laufes der Waffe im Bereich der Mündung angeordnet werden, wo er das Zielen und die Schussabgabe nicht beeinträchtigt. Vorzugsweise kann er thermisch isoliert angeordnet werden, um von einer Erwärmung des Laufes in Folge der Schussabgabe nicht beschädigt zu werden. Der Lagesensor ermittelt jedoch nur die Raumlage der Waffe relativ zum Weltkoordinatensystem, also ihre Orientierung, nicht aber ihre absolute Position, da er eine Translation entlang der Koordinatenachsen nicht detektiert. Um dennoch den Schusskanal ermitteln zu können, werden erfindungsgemäß optische Markierungen bekannter Größe verwendet, mit denen die Waffe versehen ist. Diese optische Markierungen werden von der Kamera delektiert, wobei davon ausgegangen wird, dass die Waffe beim Zielen und bei der Schussabgabe in das Blickfeld des Schützen gehalten wird, was dem üblichen, lehrbuchmäßigen Zielverhalten von Einsatzkräften entspricht. Mithilfe an sich bekannter Verfahren kann in weiterer Folge mithilfe der von den Kamerabildern aufgrund der Abstandslage in veränderter Größe erfassten optischen Markierungen die Abstandslage der Waffe zur Anzeigeeinrichtung errechnet werden. Dabei muss die optische Markierung in den Kamerabildern zunächst erkannt und in weiterer Folge vermessen werden. Durch Vergleich mit der bekannten Größe der optischen Markierung kann auf die Abstandslage der Waffe zur Anzeigeeinrichtung geschlossen werden. Auf diese Weise kann die Orientierung und die Position der Waffe im Koordinatensystem der Anzeigeeinrichtung ermittelt werden. Der Schusskanal kann in weiterer Folge anhand der bekannten Position und Orientierung der Waffe als Halbgerade errechnet und nach Transformation in das virtuelle Koordinatensystem mit virtuellen Objekten in Schnitt gebracht werden, um einen Treffer zu ermitteln. Als Auslöser dieser mathematischen Rekonstruktion des Schusskanals kann die Detektion einer Schussabgabe durch den Abzugsbetätigungsdetektor dienen. Es ist aber auch möglich den möglichen Schusskanal auch unabhängig von einer tatsächlichen Schussabgabe zu ermitteln, etwa um eine mögliche Gefährdung von eigenen Einsatzkräften durch unvorsichtiges Hantieren mit der Waffe festzustellen.

Freilich erzeugen die konkrete Waffengeometrie, die Platzierung der optischen Markierungen und des Lagesensors sowie die personenspezifische Augenposition des Schützen relativ zur Kamera eine Abweichung zwischen dem tatsächlichen Schusskanal und dem ermittelten Schusskanal. Diese Abweichung kann durch eine anfängliche Kalibrierung ausgeglichen werden, indem beispielsweise von der Anzeigeeinrichtung neun Ziele eingeblendet werden (ein mittlerer Zielpunkt und acht über die Quadranten eines zweidimensionalen Koordinatensystems der Anzeigeeinrichtung verteilte Zielpunkte), die vom Schützen nacheinander angezielt werden müssen. Die Abweichung des ermittelten Schusskanals vom jeweiligen Zielpunkt wird in eine Kalibrierungs-Transformationsmatrix umgerechnet, die in weiterer Folge bei der Rekonstruktion des Schusskanals berücksichtigt wird.

Bei der optischen Markierung handelt es sich vorzugsweise um einen QR-Code ("Quick Response"-Code), der auf einem in Gebrauchslage dem Schützen zugewandten Flächenabschnitt der Waffe montiert ist. Ein QR-Code hat den Vorteil, dass er als solcher leicht von der Kamera detektiert werden kann. Er kann etwa als quadratische oder rechteckförmige Markierung auf einem auf die Waffe aufsteckbaren Bauteil ausgeführt sein, sodass er leicht auf einer realen Waffe nachgerüstet werden kann. Die Umfangslinie des QR-Codes definiert dabei die bekannte Größe der optischen Markierung, die erfindungsgemäß durch Vergleich mit einer aus einem Kamerabild abgeleiteten Größe für die Ermittlung der Abstandslage herangezogen werden kann.

Alternativ wäre es auch denkbar, dass es sich bei der optischen Markierung um zwei an der Kimme der Waffe montierte farbliche Markierungen handelt, sowie um eine am Korn der Waffe montierte farbliche Markierung. Als farbliche Markierungen werden dabei vorzugsweise grelle Farben verwendet, die im Alltag vergleichsweise selten vorkommen. Diese farbliche Markierungen müssen in den Kamerabildern ("Frames") erkannt werden, wofür an sich bekannte Verfahren des optischen "Trackings" zur Verfügung stehen, wie noch näher ausgeführt werden wird. Die Erfassung der farblichen Markierungen in den Kamerabildern erfolgt vorzugsweise im HSV-Farbraum, da er eine zuverlässigere Erkennung ermöglicht. Selbst wenn beispielsweise ein Farbton "rot" abgedunkelt oder aufgehellt wird, so verbleibt im HSV-Farbraum der Farbwert ("Kanal Hue") trotzdem annähernd konstant.

Des Weiteren wird vorgeschlagen, dass es sich bei dem Abzugsbetätigungsdetektor um einen bei Betätigung des Abzuges geschlossenen Kontaktschalter handelt. Hierfür kann etwa ein erstes Kontaktkabel am Abzug geführt sein, das bei Betätigung des Abzuges in einen elektrischen Kontakt mit einem zweiten Kontaktkabel gebracht wird, das im Bewegungsraum des Abzuges angeordnet ist. Ein solcher Kontaktschalter ermöglicht eine zuverlässige Detektierung der Abzugsbetätigung und erscheint insbesondere in lauten Umgebungen zuverlässiger als beispielsweise akustische Systeme, die den Schussknall detektieren.

Eine mögliche Ausführung der Recheneinheit sieht vor, dass die Recheneinheit einen sensorseitigen Prozessor und einen kameraseitigen Prozessor umfasst, wobei der sensorseitige Prozessor mit dem Lagesensor der Waffe und dem Abzugsbetätigungsdetektor zur Ermittlung einer Raumlageinformation und einer Abzugsbetätigungsinformation verbunden ist, und der kameraseitige Prozessor zur Ermittlung der Abstandslage der Waffe mit der Kamera verbunden ist, wobei der sensorseitige Prozessor mit dem kameraseitigen Prozessor zur Übermittlung der Raumlageinformation und der Abzugsbetätigungsinformation über eine drahtlose Nahfeldverbindung verbunden ist, und der kameraseitige Prozessor ausgelegt ist den Schusskanal aus der Raumlageinformation und der Abstandslage der Waffe mittels an sich bekannter mathematischer Verfahren zu errechnen.

Die Erfindung wird in weiterer Folge anhand von Ausführungsbeispielen mithilfe der beiliegenden Zeichnungen näher erläutert. Es zeigen hierbei die
Fig. 1 eine schematische Darstellung zur Erläuterung der erfindungsgemäßen Anordnung und des erfindungsgemäßen Verfahrens,
Fig. 2 eine schematische Darstellung einer möglichen Ausführungsform einer Waffe mit Lagesensor und Abzugsbetätigungsdetektor zur Verwendung im Rahmen der Erfindung, und die
Fig. 3 eine schematische Darstellung einer möglichen Ausführungsform einer Waffe mit QR-Code als optische Markierung zur Verwendung im Rahmen der Erfindung.

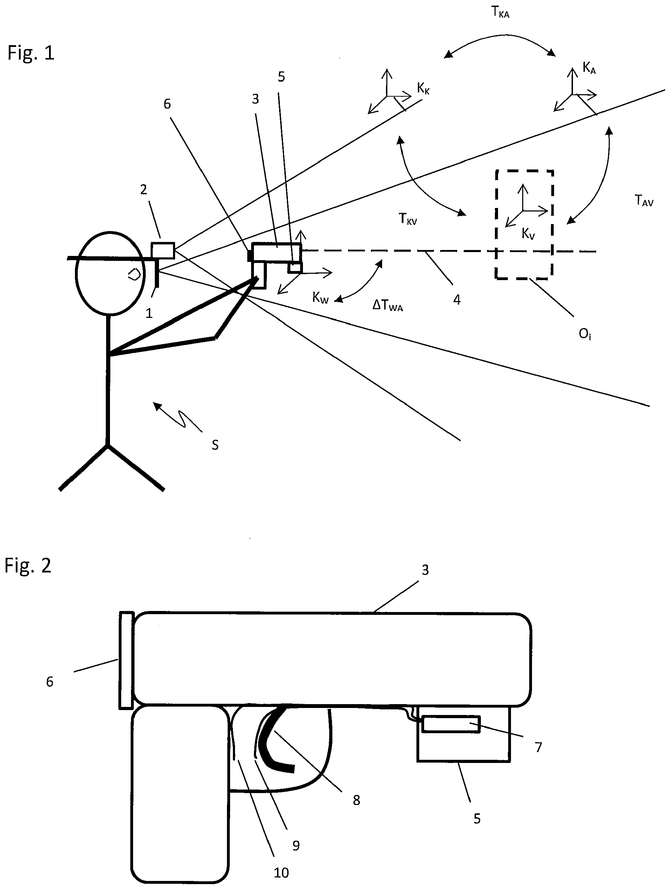

Zunächst wird auf die Fig. 1 Bezug genommen, die eine schematische Darstellung eines "Mixed-Reality (MR)"-Systems oder "Augmented Reality (AR)"-Systems zeigt. Hierbei erfolgt das Einblenden eines von einer Simulationsrecheneinheit computergenerierten, virtuellen Objektes Oi (i=1,2,...N) in das vom Schützen S wahrgenommene Blickfeld einer realen Umgebung in Abhängigkeit von der momentanen Position und Blickrichtung der Person, für deren Bestimmung in herkömmlicher Weise unterschiedliche Sensoren wie Beschleunigungssensoren (Accelerometer oder G-Sensoren), mitunter auch in Kombination mit Magnetometern und/oder Gyroskopen, sowie GPS-Systeme verwendet werden, die in der Regel in einer am Kopf des Schützen S getragenen Anzeigeeinrichtung 1 angeordnet sind. Die momentane Position und Blickrichtung der Person entscheiden zunächst darüber, ob überhaupt ein virtuelles Objekt Oi eingeblendet wird. Das Einblenden des virtuellen Objekts Oi in seiner Positionierung und Größe im Blickfeld der Person wird in vorteilhafter Weise in Abhängigkeit von der momentanen Position der beobachtenden Person, insbesondere in Abhängigkeit vom Abstand zur beobachtenden Person vorgenommen, um die realistisch wirkende Illusion eines virtuellen Abstandes zu erzeugen. Um virtuelle Objekte Oi in das vom Schützen S über die Anzeigeeinrichtung 1 wahrgenommene Blickfeld einzublenden und diese virtuellen Objekte Oi in passender Relation zu realen Objekten im Raum zu positionieren muss mithilfe einer entsprechenden Transformationsmatrix T_{AV} eine Umrechnung des "virtuellen Koordinatensystems" K_{V} der virtuellen Szenerie in das Anzeige-Koordinatensystem K_{A} der Anzeigeeinrichtung 1 vorgenommen werden. Des Weiteren ist es bekannt Anzeigeeinrichtungen 1 mit einer Kamera 2 auszustatten, deren kartesisches Koordinatensystem K_{K} mithilfe einer entsprechenden Transformationsmatrix T_{KV} ebenfalls mit dem virtuellen Koordinatensystem K_{V} und mithilfe einer entsprechenden Transformationsmatrix T_{KA} mit dem Anzeige-Koordinatensystem K_{A} der Anzeigeeinrichtung 1 harmonisiert ist. Position und Raumlage realer Objekte relativ zum Weltkoordinatensystem K_{W} der realen Umgebung können in weiterer Folge in das virtuelle Koordinatensystem K_{V} durch Methoden des optischen und/oder sensorgestützten Trackings umgerechnet werden.

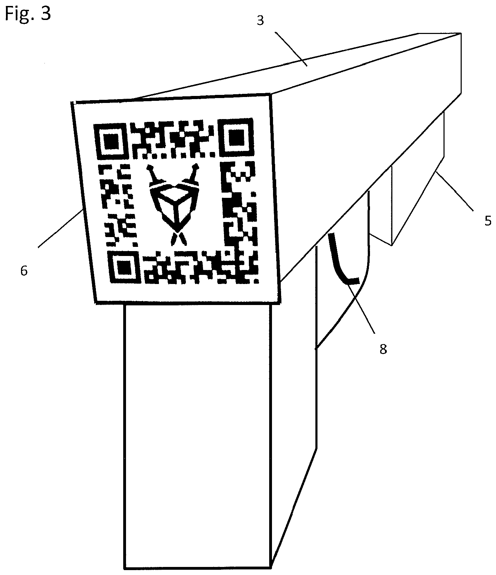

Diese Umrechnungsmöglichkeit soll im Rahmen der vorliegenden Erfindung dazu verwendet werden, eine reale, abzugsbetätigte Waffe 3 und ihres Schusskanals 4 mit computergenerierten, virtuellen Objekten Oᵢ datentechnisch so zu verknüpfen, dass eine Interaktion einer realen Schussabgabe mit virtuellen Objekten Oᵢ ermöglicht wird. Hierfür ist ein an der Waffe 3 montierter Lagesensor 5 zur Ermittlung der momentanen Raumlage der Waffe 3 vorgesehen, sowie zumindest eine an der Waffe 3 von der Kamera 2 erfassbar montierte optische Markierung 6 bekannter Größe. Im gezeigten Ausführungsbeispiel ist die optische Markierung 6 als QR-Code ausgeführt (siehe auch Fig. 3), wie noch näher ausgeführt werden wird. Des Weiteren ist die Waffe 3 mit einem durch Betätigung des Abzuges der Waffe 3 auslösbaren Abzugsbetätigungsdetektor versehen, der im gezeigten Ausführungsbeispiel als Kontaktschalter ausgeführt ist, wie ebenfalls noch näher ausgeführt werden wird. Der Lagesensor 5, die Kamera 2 und der Abzugsbetätigungsdetektor sind mit einer Recheneinheit verbunden, die die Abstandslage der Waffe 3 zur Anzeigeeinrichtung 1 ermittelt und den Schusskanal 4 aus der Raumlage und der Abstandslage der Waffe 3 errechnet. Eine konkrete Ausführung der Recheneinheit sieht etwa vor, dass die Recheneinheit einen sensorseitigen Prozessor 7 (siehe auch Fig. 2) und einen kameraseitigen Prozessor umfasst, wobei der sensorseitige Prozessor 7 mit dem Lagesensor 5 der Waffe 3 und dem Abzugsbetätigungsdetektor zur Ermittlung einer Raumlageinformation und einer Abzugsbetätigungsinformation verbunden ist, und der kameraseitige Prozessor zur Ermittlung der Abstandslage der Waffe 3 mit der Kamera 2 verbunden ist. Ferner ist der sensorseitige Prozessor 7 mit dem kameraseitigen Prozessor zur Übermittlung der Raumlageinformation und der Abzugsbetätigungsinformation über eine drahtlose Nahfeldverbindung verbunden, wobei der kameraseitige Prozessor ausgelegt ist den Schusskanal 4 aus der Raumlageinformation und der Abstandslage der Waffe 3 mittels an sich bekannter mathematischer Verfahren zu errechnen. Der kameraseitige Prozessor ist des Weiteren mit der Simulationsrecheneinheit datentechnisch verbunden, die den so im Anzeige-Koordinatensystem K_{A} ermittelten Schusskanal 4 in das virtuelle Koordinatensystem K_{V} der virtuellen Szenerie transformiert und mit virtuellen Objekten Oᵢ schneidet. Dieser Schnittvorgang wird jedenfalls dann ausgeführt, wenn der Abzugsbetätigungsdetektor eine Betätigung des Abzuges 8 der Waffe 3 detektiert hat. Der Schnittvorgang kann aber auch zu jedem anderen Zeitpunkt vorgenommen werden, etwa um das kontrollierte Führen der Waffe 3 zu prüfen. Ein ermittelter Schnittpunkt zwischen dem in das virtuelle Koordinatensystem K_{V} der virtuellen Szenerie transformierten Schusskanal 4 und einem virtuellen Objekt Oᵢ entspricht einem Treffer, wobei die Simulationsrecheneinheit durch Einblenden veränderter Objekte Oᵢ über die Anzeigeeinrichtung 1 auf den "Treffer" reagieren kann.

Der Lagesensor 5 ist im gezeigten Ausführungsbeispiel als 9-Achs IMU (Inertial Measurement Unit) G-Sensor ausgeführt und unterhalb des Laufes der Waffe 3 im Bereich der Mündung angeordnet, wo er das Zielen und die Schussabgabe nicht beeinträchtigt (siehe Fig. 2). Der Lagesensor 5 ist in einem thermisch isolierenden Gehäuse am Lauf angeordnet, um von einer Erwärmung des Laufes in Folge der Schussabgabe nicht beschädigt zu werden. Der Lagesensor 5 ermittelt die Raumlage der Waffe 3 relativ zum Weltkoordinatensystem, also ihre Orientierung, nicht aber ihre absolute Position. Um dennoch den Schusskanal 4 ermitteln zu können, werden optische Markierungen 6 bekannter Größe verwendet, mit denen die Waffe 3 versehen ist. Im gezeigten Ausführungsbeispiel handelt es sich bei der optischen Markierung 6 um einen QR-Code ("Quick Response"-Code), der auf einem in Gebrauchslage dem Schützen zugewandten Flächenabschnitt der Waffe 3 montiert ist (siehe Fig. 3). Ein QR-Code hat den Vorteil, dass er als solcher leicht von der Kamera 2 detektiert werden kann. Er kann etwa als quadratische oder rechteckförmige Markierung auf einem auf die Waffe 3 aufsteckbaren Bauteil ausgeführt sein, sodass er leicht auf einer realen Waffe 3 nachgerüstet werden kann. Die Umfangslinie des QR-Codes definiert dabei die bekannte Größe der optischen Markierung 6, die durch Vergleich mit einer aus einem Kamerabild abgeleiteten Größe für die Ermittlung der Abstandslage herangezogen werden kann.

Die Kamera 2 der Anzeigeeinrichtung 1 nimmt hierfür Kamerabilder der vom Schützen S wahrgenommenen, realen Umgebung auf. Die Recheneinheit analysiert anhand bekannter Methoden der Bildverarbeitung diese Kamerabilder ("Frames") und sucht nach einem dem QR-Code entsprechenden Muster in den Kamerabildern. Die durch die Kamera 2 ermittelten Bilder werden hierfür digitalisiert, und vorzugsweise bekannten Verfahren zur Bildaufbereitung, wie Konvertierung in Schwarz-Weiß-Bilder, Datenkomprimierung, sowie Korrektur von Schattenanomalien, unterzogen, wofür ebenfalls hinlänglich bekannte Software zur Verfügung steht. Wird das dem bekannten QR-Code entsprechende Muster in einem Kamerabild aufgefunden, wird die Umfangslinie des QR-Codes vermessen und mit der bekannten Größe des QR-Codes verglichen. Mithilfe des von den Kamerabildern aufgrund der Abstandslage in veränderter Größe erfassten QR-Codes kann schließlich die Abstandslage der Waffe 3 zur Anzeigeeinrichtung 1 errechnet werden. Auf diese Weise kann die Orientierung und die Position der Waffe 3 im Anzeige-Koordinatensystem K_{A} der Anzeigeeinrichtung 1 ermittelt werden.

Freilich erzeugen die konkrete Waffengeometrie, die Platzierung der optischen Markierungen 6 und des Lagesensors 5 sowie die personenspezifische Augenposition des Schützen S relativ zur Kamera 2 eine Abweichung zwischen dem tatsächlichen Schusskanal 4 und dem ermittelten Schusskanal 4. Diese Abweichung kann durch eine anfängliche Kalibrierung ausgeglichen werden, indem beispielsweise von der Anzeigeeinrichtung 1 neun Ziele eingeblendet werden (beispielsweise ein mittlerer Zielpunkt und acht über die Quadranten eines zweidimensionalen Koordinatensystems der Anzeigeeinrichtung 1 verteilte Zielpunkte), die vom Schützen S nacheinander angezielt werden müssen. Die Abweichung des ermittelten Schusskanals 4 vom jeweiligen Zielpunkt wird in eine Kalibrierungs-Transformationsmatrix ΔT_{WA} umgerechnet, die in weiterer Folge bei der Rekonstruktion des Schusskanals 4 berücksichtigt wird.

Der Abzugsbetätigungsdetektor ist im gezeigten Ausführungsbeispiel als ein bei Betätigung des Abzuges 8 geschlossener Kontaktschalter ausgeführt (siehe Fig. 2). Hierfür ist ein erstes Kontaktkabel 9 vom sensorseitigen Prozessor 7 ausgehend entlang der Unterseite des Laufes bis zu der dem Schützen S zugewandten Rückseite des Abzuges 8 geführt, wo es in einem nicht-isolierten Kabelteil endet. Ein zweites Kontaktkabel 10 ist vom sensorseitigen Prozessor 7 ausgehend entlang der Unterseite des Laufes bis zum Bewegungsraum des Abzuges 8 geführt, wo es ebenfalls in einem nicht-isolierten Kabelteil endet. Bei Betätigung des Abzuges 8 wird das nicht-isolierte Ende des ersten Kontaktkabels 9 in einen elektrischen Kontakt mit dem nicht-isolierten Ende des zweiten Kontaktkabels 10 gebracht, sodass der elektrische Kontakt geschlossen und ein entsprechendes Signal gesetzt wird. Gegebenenfalls kann das nicht-isolierte Kabelteil des ersten Kontaktkabels 9 und das nicht-isolierte Kabelteil des zweiten Kontaktkabels 10 in ihrer relativen Positionierung einstellbar sein, um den Abstand der nicht-isolierten Kabelteile bei gegebener Waffengeometrie optimieren zu können. Ein solcher Kontaktschalter ermöglicht eine zuverlässige Detektierung der Abzugsbetätigung und erscheint insbesondere in lauten Umgebungen zuverlässiger als beispielsweise akustische Systeme, die beispielsweise den Schussknall detektieren.

Die Erfindung ermöglicht somit eine reale, abzugsbetätigte Waffe 3 und ihren Schusskanal 4 mit computergenerierten, virtuellen Objekten Oᵢ datentechnisch so zu verknüpfen, dass eine Interaktion einer realen Schussabgabe mit virtuellen Objekten Oᵢ möglich ist. Dabei ist aber die reale Waffe 3 in ihrer Funktionalität, insbesondere in der Möglichkeit einer scharfen Schussabgabe, nicht beeinträchtigt. Des Weiteren ist auch eine Nach- oder Umrüstung von herkömmlichen Waffen möglich. Die auszubildende Person kann sich im Zuge von Ausbildung oder Training mit einer realen Waffe 3 durch ein reales Trainingsgelände bewegen, wobei vielfältige Szenarien simuliert werden können, in denen die auszubildende Person einen korrekten Anschlag, korrektes Zielen und die Entscheidung über eine allfällige Schussabgabe üben kann.

## Patentansprüche

1. Anordnung zur datentechnischen Verknüpfung einer realen, abzugsbetätigten Waffe (3) und ihres Schusskanals (4) mit computergenerierten, virtuellen Objekten (Oᵢ; i=1,2,...N) umfassend eine Simulationsrecheneinheit zur Erstellung computergenerierter, virtueller Objekte (Oᵢ), eine tragbare Anzeigeeinrichtung (1) zum Einblenden der von der Simulationsrecheneinheit erstellten computergenerierten, virtuellen Objekte (Oᵢ) in das vom Schützen (S) wahrgenommene Blickfeld, sowie einen an der Waffe (3) montierten Lagesensor (5) zur Ermittlung der momentanen Raumlage der Waffe (3), einen durch Betätigung des Abzuges (8) der Waffe (3) auslösbaren Abzugsbetätigungsdetektor, und eine Kamera (2) zur Erfassung optischer Markierungen der Waffe (3), **dadurch gekennzeichnet, dass** es sich bei der tragbaren Anzeigeeinrichtung (1) um eine transparente Datenbrille mit dem Sichtfeld einer realen Umgebung handelt, und die Kamera (2) an der Anzeigeeinrichtung (1) zur Aufnahme von Kamerabildern des Blickfelds der vom Schützen (S) wahrgenommenen, realen Umgebung angeordnet ist, wobei der Lagesensor (5), die Kamera (2) und der Abzugsbetätigungsdetektor mit einer Recheneinheit zur Ermittlung der Abstandslage der Waffe (3) zur Anzeigeeinrichtung (1) mithilfe der von den Kamerabildern aufgrund der Abstandslage in veränderter Größe erfassten optischen Markierung (6) der Waffe (3), und zum Errechnen des Schusskanals (4) aus der Raumlage und der durch Vermessen der erkannten optischen Markierung (6) und Vergleich mit der bekannten Größe der optischen Markierung (6) ermittelten Abstandslage der Waffe (3) mittels an sich bekannter mathematischer Verfahren verbunden sind, und die Recheneinheit mit der Simulationsrecheneinheit datentechnisch verbunden ist.

2. Anordnung nach Anspruch 1, **dadurch gekennzeichnet, dass** es sich bei der optischen Markierung (6) um einen QR-Code handelt, der auf einem in Gebrauchslage dem Schützen (S) zugewandten Flächenabschnitt der Waffe (3) montiert ist.

3. Anordnung nach Anspruch 1, **dadurch gekennzeichnet, dass** es sich bei der optischen Markierung (6) um zwei an der Kimme der Waffe (3) montierte farbliche Markierungen handelt, sowie um eine am Korn der Waffe (3) montierte farbliche Markierung.

4. Anordnung nach einem der Ansprüche 1 bis 3, **dadurch gekennzeichnet, dass** es sich bei dem Abzugsbetätigungsdetektor um einen bei Betätigung des Abzuges (8) geschlossenen Kontaktschalter handelt.

5. Anordnung nach einem der Ansprüche 1 bis 4, **dadurch gekennzeichnet, dass** die Recheneinheit einen sensorseitigen Prozessor (7) und einen kameraseitigen Prozessor umfasst, wobei der sensorseitige Prozessor (7) mit dem Lagesensor (5) der Waffe (3) und dem Abzugsbetätigungsdetektor zur Ermittlung einer Raumlageinformation und einer Abzugsbetätigungsinformation verbunden ist, und der kameraseitige Prozessor zur Ermittlung der Abstandslage der Waffe (3) mit der Kamera (2) verbunden ist, wobei der sensorseitige Prozessor (7) mit dem kameraseitigen Prozessor zur Übermittlung der Raumlageinformation und der Abzugsbetätigungsinformation über eine drahtlose Nahfeldverbindung verbunden ist, und der kameraseitige Prozessor ausgelegt ist den Schusskanal (4) aus der Raumlageinformation und der Abstandslage der Waffe (3) mittels an sich bekannter mathematischer Verfahren zu errechnen.

6. Verfahren zur datentechnischen Verknüpfung einer realen, abzugsbetätigten Waffe (3) und ihres Schusskanals (4) mit computergenerierten, virtuellen Objekten (Oᵢ) mittels einer Simulationsrecheneinheit zur Erstellung computergenerierter, virtueller Objekte (Oᵢ), einer tragbaren Anzeigeeinrichtung (1) zum Einblenden computergenerierter, virtueller Objekte (Oᵢ) in das vom Schützen (S) wahrgenommene Blickfeld, wobei mittels eines an der Waffe (3) montierten Lagesensors (5) die momentane Raumlage der Waffe (3) ermittelt wird, und mithilfe eines durch Betätigung des Abzuges (8) der Waffe (3) auslösbaren Abzugsbetätigungsdetektors die Betätigung des Abzuges (8) der Waffe (3) ermittelt wird, **dadurch gekennzeichnet, dass** die Einblendung der computergenerierten, virtuellen Objekte (Oᵢ) in das vom Schützen (S) wahrgenommene Blickfeld einer realen Umgebung, insbesondere in das Sichtfeld einer transparenten Datenbrille, erfolgt, und mittels einer an der Anzeigeeinrichtung (1) angeordneten Kamera (2) zur Aufnahme von Kamerabildern des Blickfelds der vom Schützen (S) wahrgenommenen, realen Umgebung die Abstandslage optischer Markierungen (6) der Waffe (3) zur Anzeigeeinrichtung (1) ermittelt wird, wobei die Ermittlung der Abstandslage der Waffe (3) zur Anzeigeeinrichtung (1) aufgrund der von den Kamerabildern aufgrund der Abstandslage in veränderter Größe erfassten optischen Markierung (6) erfolgt, und der Schusskanal (4) mittels an sich bekannter mathematischer Verfahren aus der Raumlage und der durch Vermessen der erkannten optischen Markierung (6) und Vergleich mit der bekannten Größe der optischen Markierung (6) ermittelten Abstandslage der Waffe (3) errechnet und der Simulationsrecheneinheit übermittelt wird.

## Claims

1. Assembly for the data linking of a real, trigger-actuated weapon (3) and the firing channel (4) thereof to computer-generated, virtual objects (Oᵢ; i=1,2,... N), comprising a simulation computing unit for generating computer-generated virtual objects (Oᵢ), a wearable display device (1) for overlaying the computer-generated virtual objects (Oᵢ) generated by the simulation computing unit in the field of view perceived by the marksman (S), and a position sensor (5) mounted on the weapon (3) for determining the current spatial position of the weapon (3), a trigger actuation detector which can be triggered by actuation of the trigger (8) of the weapon (3), and a camera (2) for detecting optical markings of the weapon (3), **characterized in that** the wearable display device (1) is transparent data glasses with the field of view of a real environment, and the camera (2) is arranged on the display device (1) for recording camera images of the field of view of the real environment perceived by the marksman (S), wherein the position sensor (5), the camera (2) and the trigger actuation detector are connected to a computing unit for determining the distance position of the weapon (3) from the display device (1) with the aid of the optical marking (6) of the weapon (3) detected by the camera images on the basis of the distance position in changed size, and for calculating the firing channel (4) from the spatial position and the distance position of the weapon (3) determined by measuring the detected optical marking (6) and comparison with the known size of the optical marking (6) by means of mathematical methods known per se, and the computing unit is connected to the simulation computing unit by data technology.

2. Assembly according to claim 1, **characterized in that** the optical marking (6) is a QR code which is mounted on a surface section of the weapon (3) facing the marksman (5) in the position of use.

3. Assembly according to claim 1, **characterized in that** the optical marking (6) relates to two colored markings mounted on the rear sight of the weapon (3), and one colored marking mounted on the front sight of the weapon (3).

4. Assembly according to one of claims 1 to 3, **characterized in that** the trigger actuation detector is a contact switch which is closed when the trigger (8) is actuated.

5. Assembly according to one of claims 1 to 4, **characterized in that** the computing unit comprises a sensor-side processor (7) and a camera-side processor, wherein the sensor-side processor (7) is connected to the position sensor (5) of the weapon (3) and the trigger actuation detector for determining a spatial position information and a trigger actuation information, and the camera-side processor is connected to the camera (2) for determining the distance position of the weapon (3), wherein the sensor-side processor (7) is connected to the camera-side processor for transmitting the spatial position information and the trigger actuation information via a wireless near-field connection, and the camera-side processor is designed to calculate the firing channel (4) from the spatial position information and the distance position of the weapon (3) by means of mathematical methods known per se.

6. Method for the data linking of a real, trigger-actuated weapon (3) and the firing channel (4) thereof to computer-generated, virtual objects (Oᵢ) by means of a simulation computing unit for generating computer-generated, virtual objects (Oᵢ), a wearable display device (1) for overlaying computer-generated, virtual objects (Oᵢ) in the field of view perceived by the marksman (S), wherein the current spatial position of the weapon (3) is determined by means of a position sensor (5) mounted on the weapon (3), and the actuation of the trigger (8) of the weapon (3) is determined with the aid of a trigger actuation detector which can be triggered by actuation of the trigger (8) of the weapon (3), **characterized in that** the overlaying of the computer-generated, virtual objects (Oᵢ) in the field of view of a real environment perceived by the marksman (S), in particular in the field of view of transparent data glasses, and the distance position of optical markings (6) of the weapon (3) from the display device (1) is determined by means of a camera (2) arranged on the display device (1) for recording camera images of the field of view of the real environment perceived by the marksman (S), wherein the determination of the distance position of the weapon (3) from the display device (1) is carried out on the basis of the optical marking (6) detected by the camera images due to the distance position in changed size, and the firing channel (4) is calculated by means of mathematical methods known per se from the spatial position and the distance position of the weapon (3) determined by measuring the detected optical marking (6) and comparison with the known size of the optical marking (6) and is transmitted to the simulation computing unit.

## Revendications

1. Dispositif pour la communication de données entre une arme (3) réelle actionnée par une queue de détente et son couloir de tir (4) comportant des objets virtuels (Oᵢ ; i = 1,2,...N) générés par ordinateur, comprenant une unité de calcul de simulation destinée à créer des objets virtuels (Oᵢ) générés par ordinateur, un dispositif d'affichage portable (1) destiné à faire apparaître les objets virtuels (Oᵢ) générés par ordinateur créés par l'unité de calcul de simulation dans le champ de vision perçu par le tireur (S), ainsi qu'un capteur de position (5) monté sur l'arme (3) et destiné à déterminer la position dans l'espace instantanée de l'arme (3), un détecteur d'actionnement de la queue de détente pouvant être déclenché par l'actionnement de la queue de détente (8) de l'arme (3), et une caméra (2) destinée à saisir des marquages optiques de l'arme (3), **caractérisé en ce que** le dispositif d'affichage portable (1) est une paire de lunettes de données transparentes avec le champ de vision d'un environnement réel et la caméra (2) est disposée sur le dispositif d'affichage (1) de façon à acquérir des images de caméra du champ de vision de l'environnement réel perçu par le tireur (S), le capteur de position (5), la caméra (2) et le détecteur d'actionnement de la queue de détente étant reliés à une unité de calcul destinée à déterminer la distance entre l'arme (3) et le dispositif d'affichage (1) à l'aide du marquage optique (6) de l'arme (3), acquis à l'aide des images de la caméra à une taille variable en fonction de la distance, et à calculer le couloir de tir (4) à partir de la position dans l'espace et de la distance de l'arme (3) déterminée par la mesure du marquage optique (6) reconnu et la comparaison avec la taille connue du marquage optique (6) au moyen d'une méthode mathématique connue, et l'unité de calcul est connectée à l'unité de calcul de simulation pour échanger des données.

2. Dispositif selon la revendication 1, **caractérisé en ce que** le marquage optique (6) est un code QR qui est monté sur une zone de surface de l'arme (3) tournée vers le tireur (S) dans la position d'utilisation.

3. Dispositif selon la revendication 1, **caractérisé en ce que** le marquage optique (6) est formé par deux marques de couleur placées sur la mire de l'arme (3) et une marque de couleur placée sur le guidon de l'arme (3).

4. Dispositif selon l'une des revendications 1 à 3, **caractérisé en ce que** le détecteur d'actionnement de la queue de détente est un contacteur qui se ferme lors de l'actionnement de la queue de détente (8).

5. Dispositif selon l'une des revendications 1 à 4, **caractérisé en ce que** l'unité de calcul comprend un processeur côté capteur (7) et un processeur côté caméra, le processeur côté capteur (7) étant connecté au capteur de position (5) de l'arme (3) et au détecteur d'actionnement de la queue de détente pour déterminer une information de position dans l'espace et une information d'actionnement de la queue de détente et le processeur côté caméra étant connecté à la caméra (2) pour déterminer la distance de l'arme (3), le processeur côté capteur (7) étant connecté au processeur côté caméra pour transmettre l'information de position dans l'espace et l'information d'actionnement de la queue de détente par une connexion sans fil en champ proche et le processeur côté caméra étant conçu pour calculer le couloir de tir (4) à partir de l'information de position dans l'espace et de la distance de l'arme (3) au moyen de méthodes mathématiques connues.

6. Procédé pour la communication de données entre une arme (3) réelle actionnée par une queue de détente et son couloir de tir (4) comportant des objets virtuels (Oᵢ ; i = 1,2,...N) générés par ordinateur au moyen d'une unité de calcul de simulation destinée à créer des objets virtuels (O;) générés par ordinateur, d'un dispositif d'affichage portable (1) destiné à faire apparaître des objets virtuels (Oᵢ) générés par ordinateur dans le champ de vision perçu par le tireur (S), dans lequel la position dans l'espace instantanée de l'arme (3) est déterminée au moyen d'un capteur de position (5) monté sur l'arme (3) et l'actionnement de la queue de détente (8) est déterminé au moyen d'un détecteur d'actionnement de la queue de détente pouvant être déclenché par l'actionnement de la queue de détente (8) de l'arme (3), **caractérisé en ce que** les objets virtuels générés par ordinateur (O;) sont projetés dans le champ de vision d'un environnement réel perçu par le tireur (S), en particulier dans le champ de vision de lunettes de données transparentes, et une caméra (2) disposée sur le dispositif d'affichage (1) de façon à acquérir des images de caméra du champ de vision de l'environnement réel perçu par le tireur (S) détermine la distance entre des marquages optiques (6) de l'arme (3) et le dispositif d'affichage (1), la distance entre l'arme (3) et le dispositif d'affichage (1) étant déterminée à l'aide du marquage optique (6) acquis par les images de la caméra à une taille variable en fonction de la distance, et le couloir de tir (4) est calculé à partir de la position dans l'espace et de la distance de l'arme (3), déterminée par la mesure du marquage optique (6) reconnu et la comparaison avec la taille connue du marquage optique (6) au moyen de méthodes mathématiques connues, et transmis à l'unité de calcul de simulation.
